# EUROPEAN PATENT APPLICATION

(11) **EP 4 357 116 A2**
(43) Date of publication of application: **24.04.2024**
(21) Application number: 23197884.2
(22) Date of filing: 18.09.2023
(51) Int. Cl.: B29D 11/00, G02B 27/01

(54) **METHODS OF MANUFACTURE FOR PANCAKE OPTICS**

(30) Priority: 29.09.2022 US 202217936493
(71) Applicant: Meta Platforms Technologies, LLC, Menlo Park, CA 94025 (US)
(72) Inventor: BOLLMAN, Brent, Menlo Park, 94025 (US); SHARP, Gary D, Menlo Park, 94025 (US); HUANG, Keyuan, Menlo Park, 94025 (US)
(74) Representative: Murgitroyd & Company

(57) **Abstract**

The disclosed computer-implemented method may include coupling an array of reflective polarizers to a back surface of a back optical substrate; coupling an array of quarter-wave plates to a front surface of the back optical substrate such that the array of quarter-wave plates is aligned with the array of reflective polarizers; molding the back optical substrate with at least one initial mold, wherein the at least one initial mold defines an initial array of optical element surfaces that is aligned with the array of quarter-wave plates; and twin-sheet thermoforming, between a front twin-sheet mold and a back twin-sheet mold, the back optical substrate with a front optical substrate, wherein the front twin-sheet mold defines a front array of optical element surfaces and the back mold defines a back array of optical element surfaces. Various other methods, apparatuses, and systems are also disclosed.

## Description

### BACKGROUND

Fabricating high-precision optical elements can be a slow and expensive process. High-precision formation of pancake lenses may be important to optical performance. In particular, because pancake lenses may include multiple reflective surfaces, small imprecisions may result in significant performance issues. Optical materials for precision injection techniques (e.g., resin materials suitable for high-performance optics) may be expensive. These precision techniques may also result in a low throughput relative to the size of the lenses produced.

### SUMMARY

In accordance with a first aspect of the present disclosure, there is provided a method comprising: coupling an array of reflective polarizers to a back surface of a back optical substrate; coupling an array of quarter-wave plates to a front surface of the back optical substrate such that the array of quarter-wave plates is aligned with the array of reflective polarizers; molding the back optical substrate with at least one initial mold, wherein the at least one initial mold defines an initial array of optical element surfaces that is aligned with the array of quarter-wave plates; and twin-sheet thermoforming, between a front twin-sheet mold and a back twin-sheet mold, the back optical substrate with a front optical substrate, wherein the front twin-sheet mold defines a front array of optical element surfaces and the back mold defines a back array of optical element surfaces.

In some embodiments, coupling the array of reflective polarizers to the back surface of the back optical substrate comprises solvent welding the array of reflective polarizers to the back surface of the back optical substrate.

In some embodiments, coupling the array of quarter-wave plates to the front surface of the back optical substrate comprises aligning each quarter-wave plate within the array of quarter-wave plates to an optical axis of a corresponding reflective polarizer within the array of reflective polarizers.

In some embodiments, the method further comprising measuring an optical axis of each reflective polarizer within the array of reflective polarizer before coupling a corresponding quarter-wave plate within the array of quarter-wave plates to the front surface of the back optical substrate.

In some embodiments, coupling the array of quarter-wave plates to the front surface of the back optical substrate comprises radially patterning each quarter-wave plate within the array of quarter-wave plates to be thicker toward a perimeter of the quarter-wave plate.

In some embodiments, coupling the array of quarter-wave plates to the front surface of the back optical substrate comprises slot-die coating the array of quarter-wave plates onto the front surface of the back optical substrate.

In some embodiments, the method further comprising coupling an array of partial reflectors to a front surface of the front optical substrate.

In some embodiments, the method further comprising singulating an array of pancake lens stacks from the back optical substrate and the front optical substrate in alignment with the front array of optical element surfaces and the back array of optical element surfaces.

In some embodiments, the method further comprising, for each pancake lens stack within the array of pancake lens stacks, coupling a back lens of the pancake lens stack originating from the back optical substrate with a front lens of the pancake lens stack originating from the front optical substrate.

In some embodiments, the method further comprising: applying a back holding force to hold the molded back optical substrate to the back mold and a front holding force to hold the molded front optical substrate to the front mold; applying at least one adhesive to a back surface of the molded front optical substrate and the front surface of the molded back optical substrate; inserting volume fill material between the molded back optical substrate and the molded front optical substrate; and vacuum laminating the molded front optical substrate, adhesive, volume fill material, and molded back optical substrate together.

In some embodiments, the volume fill comprises an integral compression-molded element.

In some embodiments, the volume fill comprises a plurality of volume-fill chunks.

In some embodiments, the method further comprising curing the adhesive after vacuum laminating the molded front optical substrate, adhesive, volume fill material, and molded back optical substrate together, thereby creating an unsingulated array of pancake lenses.

In some embodiments, the method further comprising coupling an array of partial mirrors to the front surface of the front optical substrate.

In some embodiments, the method further comprising singulating the unsingulated array of pancake lenses.

In accordance with a second aspect of the present disclosure, there is provided an apparatus comprising: a pancake lens, comprising: a front lens; a partial reflector coupled to a front surface of the front lens; a back lens; a quarter-wave plate coupled to a front surface of the back lens; and a reflective polarizer coupled to a back surface of the back lens.

In some embodiments, where the pancake lens further comprises: volume-fill material between the front lens and the back lens; and adhesive coupling the volume-fill material, the front lens, and the back lens together.

In some embodiments, the volume-fill material comprises a plurality of discrete chunks of material.

In some embodiments, the front lens and the back lens are thermoformed from a shared thermoforming process.

In accordance with a second aspect of the present disclosure, there is provided a system comprising: a pancake lens, comprising: a front lens; a partial reflector coupled to a front surface of the front lens; a back lens, wherein the front lens and the back lens are thermoformed from a shared thermoforming process; a quarter-wave plate coupled to a front surface of the back lens; and a reflective polarizer coupled to a back surface of the back lens; and a head-mounted display comprising the pancake lens.

### BRIEF DESCRIPTION OF THE DRAWINGS

The accompanying drawings illustrate a number of exemplary embodiments and are a part of the specification. Together with the following description, these drawings demonstrate and explain various principles of the present disclosure.
FIGS. 1A and 1B are illustrations of an example intermediate article of manufacture for an array of pancake optics according to some embodiments.
FIGS. 2A and 2B are illustrations of an example intermediate article of manufacture for an array of pancake optics according to some embodiments.
FIG. 3 is an illustration of an example molding step for manufacturing an array of pancake optics according to certain embodiments.
FIG. 4 is an illustration of an example molding step for manufacturing an array of pancake optics according to some embodiments.
FIG. 5 is an illustration of an example step for manufacturing an array of pancake optics according to some embodiments.
FIG. 6 is an illustration of an example step for manufacturing an array of pancake optics according to further embodiments.
FIG. 7 is an illustration of an example volume-fill step for manufacturing an array of pancake optics according to some embodiments.
FIG. 8 is an illustration of an example volume-fill step for manufacturing an array of pancake optics according to further embodiments.
FIG. 9 is an illustration of an example volume-fill step for manufacturing an array of pancake optics according to still further embodiments.
FIG. 10 is an illustration of an example step for manufacturing an array of pancake optics according to certain embodiments.
FIG. 11 is an illustration of an example volume-fill step for manufacturing an array of pancake optics according to some embodiments.
FIG. 12 is an illustration of an example step for singulating pancake optics apparatuses from an array of pancake optics according to certain embodiments.
FIG. 13 is an illustration of an example pancake optics stack according to some embodiments.
FIG. 14 is a flow diagram of an example method for manufacturing pancake optics according to various embodiments.
FIG. 15 is an illustration of exemplary augmented-reality glasses that may be used in connection with embodiments of this disclosure.
FIG. 16 is an illustration of an exemplary virtual-reality headset that may be used in connection with embodiments of this disclosure.

Throughout the drawings, identical reference characters and descriptions indicate similar, but not necessarily identical, elements. While the exemplary embodiments described herein are susceptible to various modifications and alternative forms, specific embodiments have been shown by way of example in the drawings and will be described in detail herein. However, the exemplary embodiments described herein are not intended to be limited to the particular forms disclosed. Rather, the present disclosure covers all modifications, equivalents, and alternatives falling within the scope of the appended claims.

### DETAILED DESCRIPTION OF EXEMPLARY EMBODIMENTS

Fabricating high-precision optical elements can be a slow and expensive process. High-precision formation of pancake lenses may be important to optical performance. In particular, because pancake lenses may include multiple reflective surfaces, small imprecisions may result in significant performance issues. Optical materials for precision injection techniques (e.g., resin materials suitable for high-performance optics) may be expensive. These precision techniques may also result in a low throughput relative to the size of the lenses produced.

The present disclosure is generally directed to methods of manufacture for pancake lenses. A method of manufacture may be based on thermoforming surfaces for thin optical layers. For example, many pieces of reflective polarizer film may be applied (e.g., by solvent welding) to one side of a large sheet of substrate (e.g., polycarbonate). On the other side of the sheet of substrate, retardation material may be applied (e.g., aligning the slow axis to the measured orientation of the reflective polarizer film on the opposite side). The sheet may then be subjected to a forming or molding process (e.g., progressive die forming) to create many instances of one of the two surfaces for the pancake lens. Using twin-sheet thermoforming, the other surface for the pancake lenses may also be formed. In some examples, pancake lenses may also include a volume fill, in which case the method of manufacture may also include holding the sheets in place against the molds (e.g., with an electrostatic chuck). The fill may then be introduced, either in the form of compression molded parts, or a volume-consuming fill of small elements (e.g., spheres). In either case, the method may proceed with vacuum lamination, leaving minimal room for adhesive. An ultraviolet cure may then be applied, and pancake lens assemblies singulated. In contrast to injection molding, this process may allow for highly parallelized fabrication and the use of low-cost materials with minimal waste, all while maintaining high quality and precision of manufactured elements.

Features from any of the embodiments described herein may be used in combination with one another in accordance with the general principles described herein. These and other embodiments, features, and advantages will be more fully understood upon reading the following detailed description in conjunction with the accompanying drawings and claims.

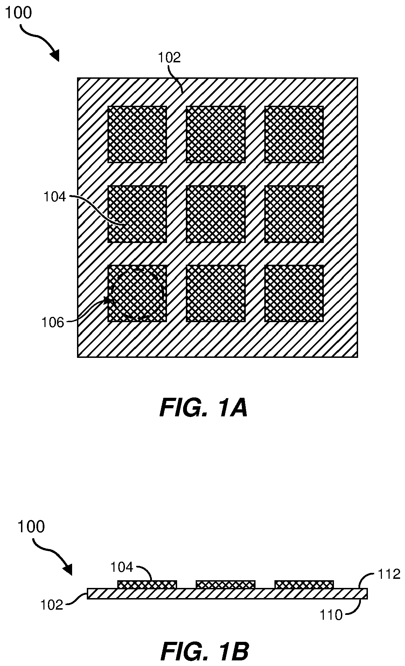

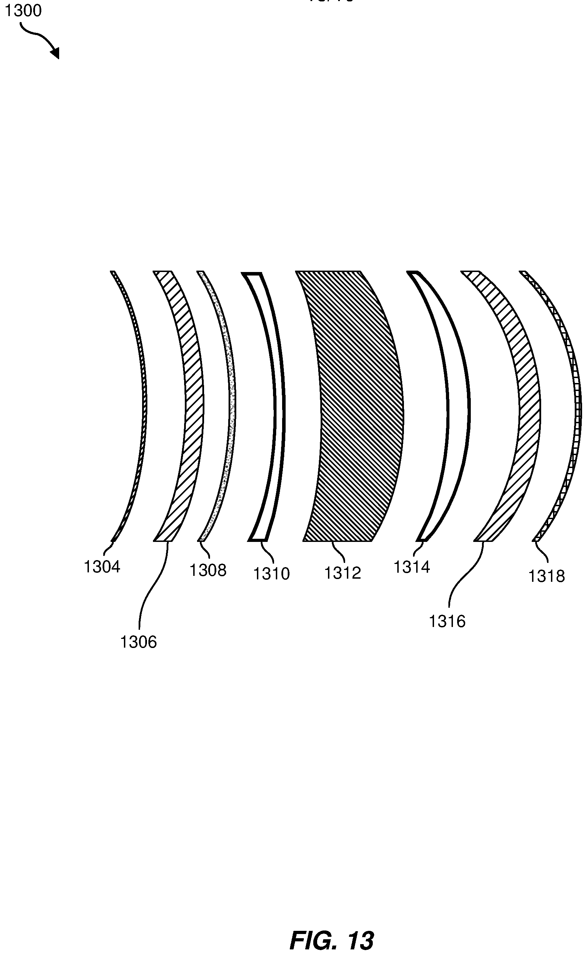

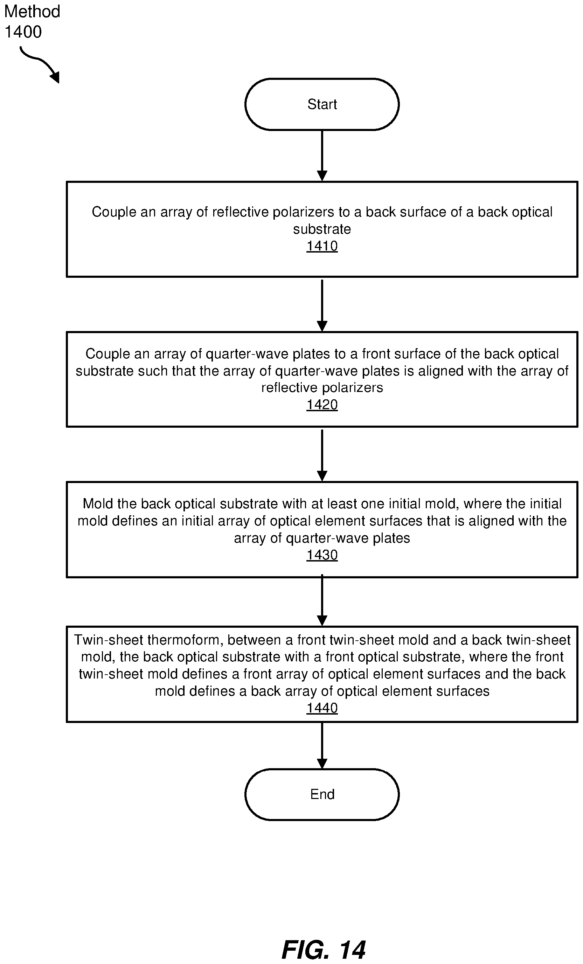

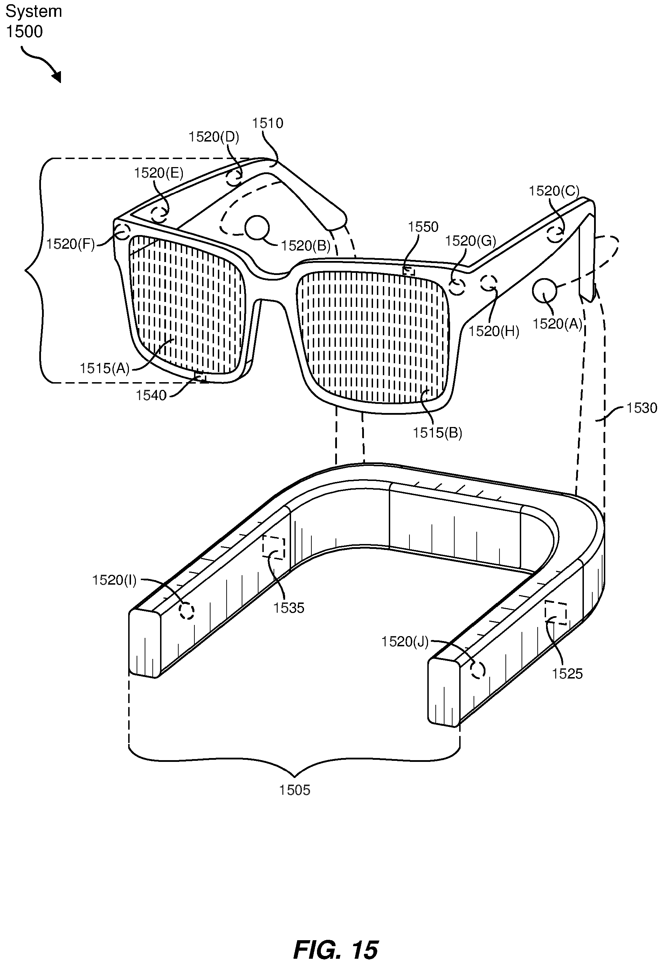

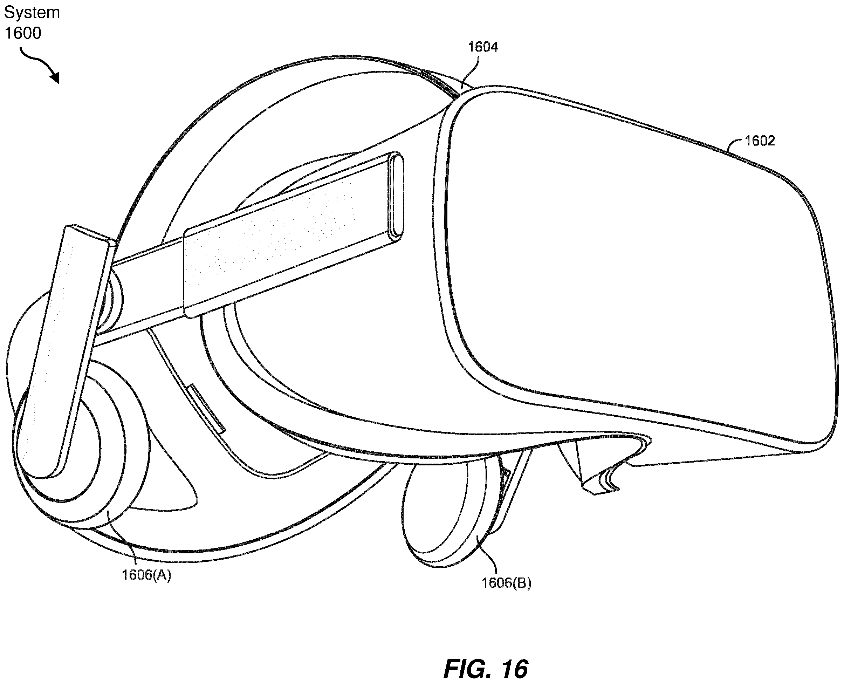

The following will provide, with reference to FIGS. 1-12, steps for manufacturing arrays of pancake optics (and, e.g., corresponding intermediate articles); with reference to FIG. 13, an example pancake optics stack; with reference to FIG. 14, an example method for manufacturing pancake optics; and with reference to FIGS. 15 and 16, example augmented-reality and virtual-reality systems.

FIGS. 1A and 1B are illustrations of an example intermediate article 100 of manufacture for an array of pancake optics. FIG. 1A is a back view of article 100, and FIG 1B is a side view of article 100. As shown in FIGS. 1A and 1B, article 100 may include an optical substrate 102. Optical substrate 102 may represent any suitable material. In some examples, optical substrate 102 may be a thermoplastic. In various examples, optical substrate 102 may be composed of one or more materials suitable for forming precision lens surfaces. For example, optical substrate 102 may be composed of polycarbonate. In one example, optical substrate 102 may be a sheet of highly stretched polycarbonate. Optical substrate 102 may have any suitable dimensions. For example, optical substrate 102 may have a surface area that is 2 times or more, 15 times or more, 40 times or more, 250 times or more, or 2000 times or more the surface area of a pancake lens to be manufactured. As examples, optical substrate 102 may be about 0.5 square meters or more, about 1 square meter or more, about 4 square meters or more, or about 10 square meters or more. Optical substrate 102 may be of any suitable thickness. For example, optical substrate 102 may be about 2 mm thickness or less, about 1.5 mm thickness or less, about 1 mm thickness or less, about 0.7 mm thickness or less, or about 0.5 mm thickness or less.

As shown in FIG. 1B, optical substrate 102 may have a front surface 110 and a back surface 112. In one example, a method of manufacture may include coupling an array of reflective polarizers 104 to the back surface 112 of optical substrate 102. Coupling the array of reflective polarizers 104 to back surface 112 may be performed in any of a variety of ways. For example, coupling the array of reflective polarizers 104 to back surface 112 may be performed by solvent-welding the array of reflective polarizers 104 to back surface 112 (e.g., chemically welding the array of reflective polarizers 104 to back surface 112 using a solvent). Additionally or alternatively, coupling the array of reflective polarizers 104 to back surface 112 may include laminating the array of reflective polarizers 104 to back surface 112 (e.g., using an optically clear film-based adhesive).

In some examples, the array of reflective polarizers 104 may be separated elements, as depicted in FIGS. 1A and 1B. In some examples, the array of reflective polarizers 104 may (e.g., before and/or after coupling to back surface 112) be within an integral reflective polarizer material (e.g., to be separated at a later point in the manufacturing process).

While the array of reflective polarizers 104 is depicted in FIGS. 1A and 1B as arranged in a regular grid, the array of reflective polarizers 104 may be arranged in any suitable pattern. In addition, while the array of reflective polarizers 104 are depicted as square shaped, the reflective polarizers may have any suitable initial shape (e.g., square, rectangular, circular, etc.). In general, each reflective polarizer may large enough to cover the surface of a lens to later be singulated from optical substrate 102 (as will be described in greater detail below). Thus, for example, FIG. 1A shows an approximate lens area 106, for which the corresponding reflective polarizer may be slightly oversized.

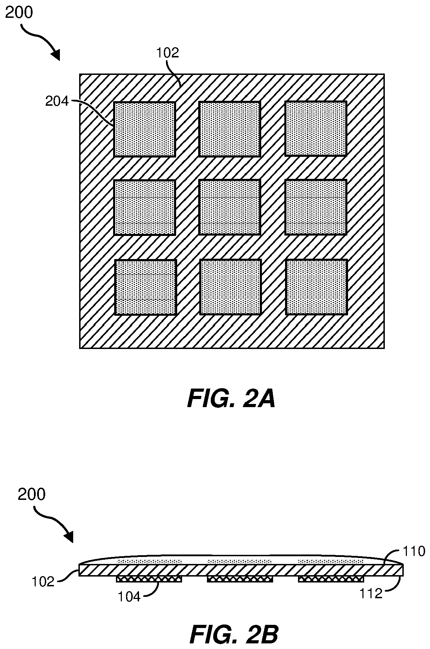

FIGS. 2A and 2B are illustrations of an example intermediate article 200 of manufacture for an array of pancake optics. As may be appreciated, article 200 may be derived from article 100 of FIGS. 1A and 2A. FIG. 2A is a front view of article 200, and FIG 2B is a side view of article 200. As shown in FIGS. 2A and 2B, the method of manufacture may include coupling an array of quarter-wave plates 204 to front surface 110 of article 200 such that the array of quarter-wave plates 204 is aligned with the array of reflective polarizers 104 on the back surface 112. As used herein, the term "quarter-wave plate" may refer to any polarization control material, structure, and/or element.

In some examples, the method of manufacture may include aligning each quarter-wave plate within the array of quarter-wave plates 204 to an optical axis of a corresponding reflective polarizer within the array of reflective polarizers 104. Thus, for example, each quarter-wave plate on front surface 110 may be aligned at 45 degrees from the optical axis of the corresponding reflective polarizer on the back surface 112. To this end, in some examples, the method of manufacture may include measuring the optical axis of each reflective polarizer before coupling the corresponding quarter-wave plate. The method may include measuring the optical axis of each reflective polarizer using any suitable means, including, without limitation, a polarimeter, a polariscope, and/or a set of cross polarizers.

Coupling the array of quarter-wave plates 204 to front surface 110 may be performed in any of a variety of ways. In some examples, coupling the array of quarter-wave plates 204 may include performing a slot-die coating to create each quarter-wave plate on the front surface 110. In some examples, in addition to aligning each quarter-wave plate at 45 degrees from the optical axis of the corresponding reflective polarizer, the method of manufacture may include patterning the quarter-wave plate material when slot-die coating to manage strain. For example, the method may include radially patterning the quarter-wave plate material to be thicker away from the center of the quarter-wave plate. Thus, when a lens is formed from the corresponding portion of optical substrate 102, the strain generated (e.g., greater at the edges) will be compensated for by the thickness of the quarter-wave plate material, thereby preserving precise polarization properties of the quarter-wave plate despite the strain.

As another example of coupling the array of quarter-wave plates 204 to front surface 110, instead of slot-die coating, the method may include coupling a film to front surface 110. For example, coupling the array of quarter-wave plates 204 to front surface 110 may be performed by solvent-welding the array of quarter-wave plates 204 to front surface 110 (e.g., chemically welding the array of quarter-wave plates 204 to front surface 110 using a solvent). Additionally or alternatively, coupling the array of quarter-wave plates 204 to front surface 110 may include laminating the array of quarter-wave plates 204 to front surface 110 (e.g., using an optically clear film-based adhesive).

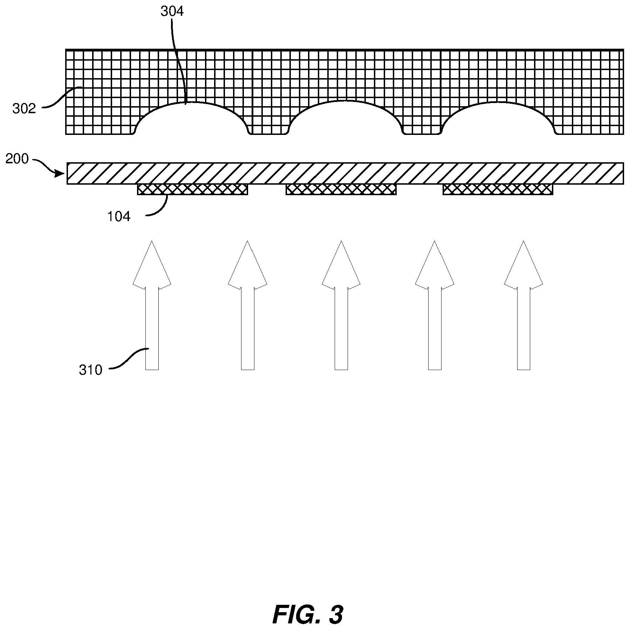

FIG. 3 is an illustration of an example molding step for manufacturing an array of pancake optics. As shown in FIG. 3, a mold 302 may define an array of optical element surfaces 304 that is aligned with array of quarter-wave plates 204 (and, so, array of reflective polarizers 104). In some examples, mold 302 may be a high-precision mold (e.g., diamond-turned to define an array of optical element surfaces 304). The method of manufacture may include applying a pressure 310 to article 200 against mold 302. In some examples, performing the molding may include performing a thermoform process. In some examples, the thermoform process may be performed at a high level of pressure. By way of examples, without limitation, the thermoform process may be performed at 800 psi or more, at 900 psi or more, at 1000 psi or more, at 1100 psi or more, or at 1200 psi or more.

In addition to or instead of the thermoform process described above, in some examples the method of manufacture may include a compression molding process. For example, the method may include clamping two precision surfaces (each defining, e.g., an array of optical element surfaces) with article 200 in between. As another example, the method of manufacture may include a progressive die forming process. Thus, the method may progressively bend article 200 using a series of dies until reaching a target shape.

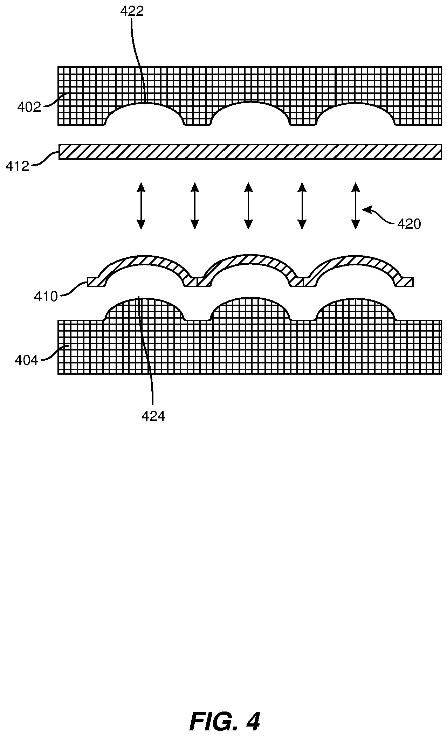

FIG. 4 is an illustration of an example molding step for manufacturing an array of pancake optics. As shown in FIG. 4, article 200 from FIG. 3 may have been molded into an intermediate article 410. In addition, the molding step of FIG. 4 may include a mold 402, a mold 404, and an optical substrate 412. Optical substrate 412 may represent any suitable material. In some examples, optical substrate 412 may be a thermoplastic. In various examples, optical substrate 412 may be composed of one or more materials suitable for forming precision lens surfaces. For example, optical substrate 412 may be composed of polycarbonate. In one example, optical substrate 412 may be a sheet of highly stretched polycarbonate. Optical substrate 412 may have any suitable dimensions. For example, optical substrate 412 may have a surface area that is 2 times or more, 15 times or more, 40 times or more, 250 times or more, or 2000 times or more the surface area of a pancake lens to be manufactured. As examples, optical substrate 412 may be about 0.5 square meters or more, about 1 square meter or more, about 4 square meters or more, or about 10 square meters or more. Optical substrate 412 may be of any suitable thickness. For example, optical substrate 412 may be about 2 mm thickness or less, about 1.5 mm thickness or less, about 1 mm thickness or less, about 0.7 mm thickness or less, or about 0.5 mm thickness or less. In some examples, optical substrate 412 may be made of the same material as optical substrate 102 of FIGS. 1A and 1B and/or may have surface area dimensions that approximately match those of optical substrate 102 of FIGS. 1A and 1B.

Molds 402 and 404 may be precision-aligned with each other-e.g., such that an array of optical element surfaces 422 defined by mold 402 aligns with an array of optical element surfaces 424 defined by mold 404. The method of manufacture may then include twin-sheet thermoforming, between molds 402 and 404, article 410 with optical substrate 412. For example, the method may include heating article 410 and optical substrate 412 and applying an air pressure 420 between article 410 and optical substrate 412. In this manner, the method may achieve optical alignment between the optical elements of article 410 and optical substrate 412 (e.g., the decenter and the tilt of the corresponding optical surfaces may be aligned).

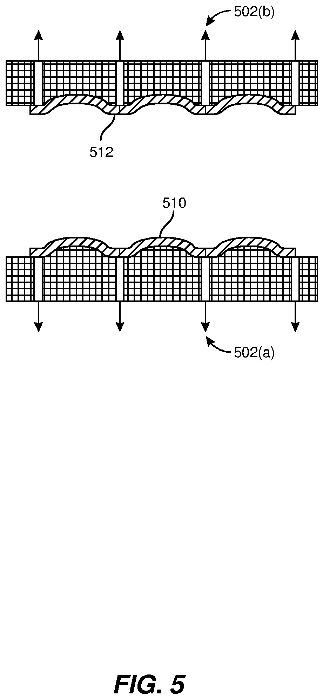

FIG. 5 is an illustration of an example step for manufacturing an array of pancake optics. As shown in FIG. 5, following the twin-sheet thermoforming, article 410 may be an intermediate article 510, and optical substrate 412 may have formed into an intermediate article 512. Article 510 and article 512 may be held in place via a holding force 502(a) and a holding force 502(b), respectively. The method of manufacture may use any suitable source for holding forces 502(a) and (b). For example, holding forces 502(a) and (b) may originate from one or more electrostatic chucks. Additionally or alternatively, holding forces 502(a) and (b) may originate from one or more pneumatic grippers.

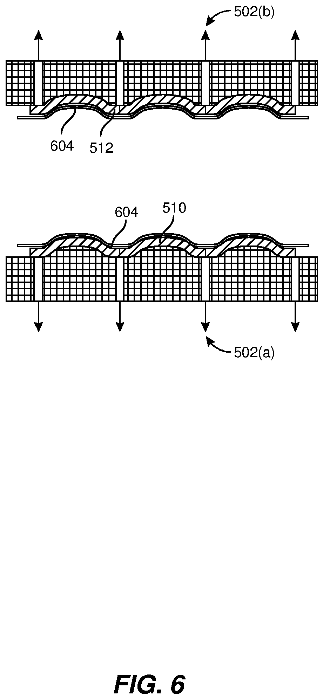

FIG. 6 is an illustration of an example step for manufacturing an array of pancake optics. As shown in FIG. 6, as articles 510 and 512 are held in place, the method of manufacture may include applying an adhesive 604 to the back surface of article 512 and the front surface of article 510. In some examples, the adhesive may be an optically clear adhesive.

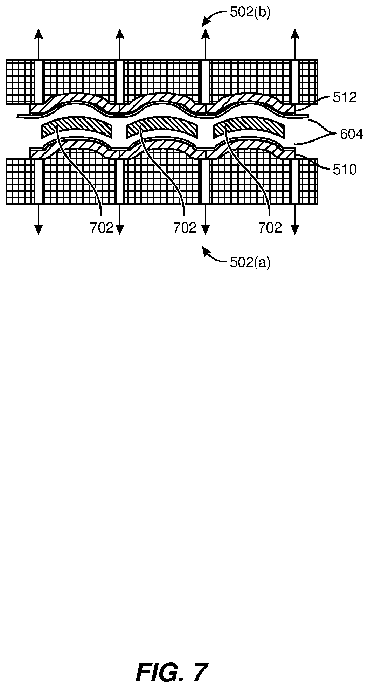

FIG. 7 is an illustration of an example volume-fill step for manufacturing an array of pancake optics. As shown in FIG. 7, an array of volume-fill elements 702 may be inserted between articles 510 and 512. The volume-fill elements may have any suitable properties. For example, the volume-fill elements may be optically clear and have low haze. In some examples, the volume-fill elements may be index matched to articles 510 and 512 (e.g., to optical substrate 102 of FIGS. 1A and 1B and/or to optical substrate 412 of FIG. 4). In some examples, the volume-fill elements may be compression molded.

After inserting the array of volume-fill elements 702, the method of manufacture may include assembling a stack including article 512, array of volume-fill elements 702, and article 510 connected with adhesive 604. In some examples, the method of manufacture may include vacuum laminating the components of the stack together.

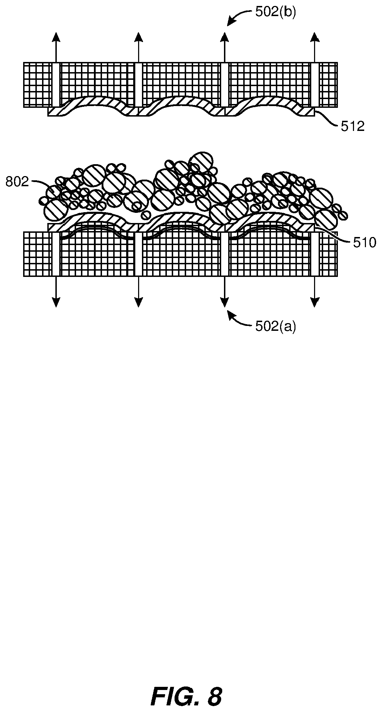

FIG. 8 is an illustration of an example volume-fill step for manufacturing an array of pancake optics. As shown in FIG. 8, the method may include filling space between articles 510 and 512 with a collection of volume fill chunks 802. The volume-fill chunks 802 may have any suitable properties. For example, the volume-fill chunks 802 may be optically clear and have low haze. In some examples, the volume-fill chunks 802 may be index matched to articles 510 and 512 (e.g., to optical substrate 102 of FIGS. 1A and 1B and/or to optical substrate 412 of FIG. 4). In some examples, the volume-fill chunks 802 may include a thermoplastic. For example, the volume-fill chunks 802 may include poly(methyl methacrylate).

The volume-fill chunks 802 may be any suitable shape. In some examples, the volume-fill chunks 802 may be approximately spherical. In other examples, without limitation, the volume-fill chunks 802 may be approximately cubical, approximately cylindrical, irregularly shaped, and/or a mix of shapes. In some examples, the volume-fill chunks 802 may be approximately uniform in size and/or shape. In some examples, the volume-fill chunks 802 may have a range of differing sizes. Example chunk volume ratios between the 90^{th} percentile in chunk volume and the 10^{th} percentile in chunk volume include, without limitation, 3:2 or more, 2:1 or more, 4:1 or more, 9:1 or more, 20:1 or more, and 80:1 or more. The method of manufacture may use volume-fill chunks with any suitable average packing density. Examples include, without limitation, an average packing density of 0.55 or more, 0.6 or more, 0.65 or more, 0.7 or more, 0.75 or more, and 0.8 or more.

As discussed above, the method of manufacture may include filling volume between articles 510 and 512 with volume-fill chunks 802. However, the volume-fill chunks 802 may not pack perfectly to consume all space between articles 510 and 512. The method of manufacture may therefore also include filling the remaining volume between articles 510 and 512 with adhesive. The adhesive may be optically clear. In some examples, the adhesive may be index matched to the volume-fill chunks 802 and/or to articles 510 and/or 512.

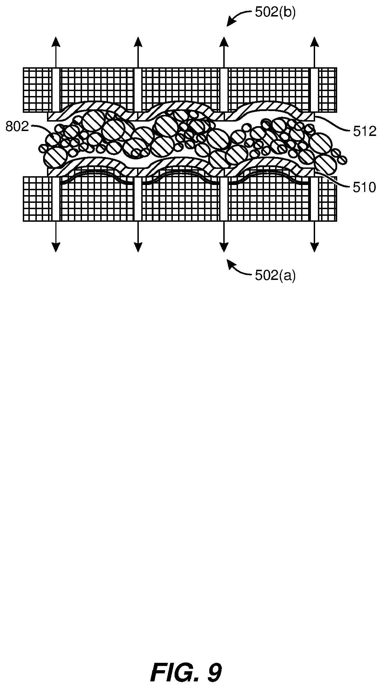

FIG. 9 is an illustration of an example volume-fill step for manufacturing an array of pancake optics. As shown in FIG. 9, the method of manufacture may include assembling a stack including article 512, a mix of volume-fill chunks 802 and adhesive, and article 510. In some examples, the method of manufacture may include vacuum laminating the components of the stack together. When compressing the components of the stack together, in some examples excessive volume-fill chunks and/or adhesive may overflow out into a nonactive area. In this manner, the volume of volume-fill chunks and adhesive inserted between articles 510 and 512 before vacuum lamination need not be precise.

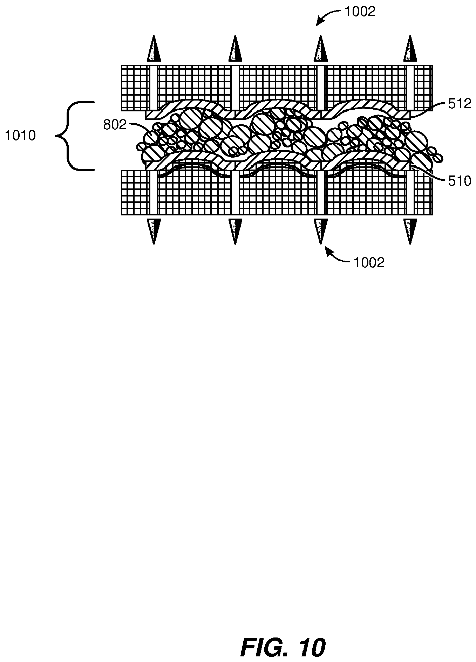

FIG. 10 is an illustration of an example step for manufacturing an array of pancake optics. As shown in FIG. 10, the preceding steps of the method of manufacture may have resulted in an assembled stack 1010. The method of manufacture may then include applying a curing process to edge areas of stack 1010. For example, the method of manufacture may include applying ultraviolet light 1002 to edge areas of stack 1010 to set a portion of the adhesive and thereby lock the relative positions of articles 510 and 512.

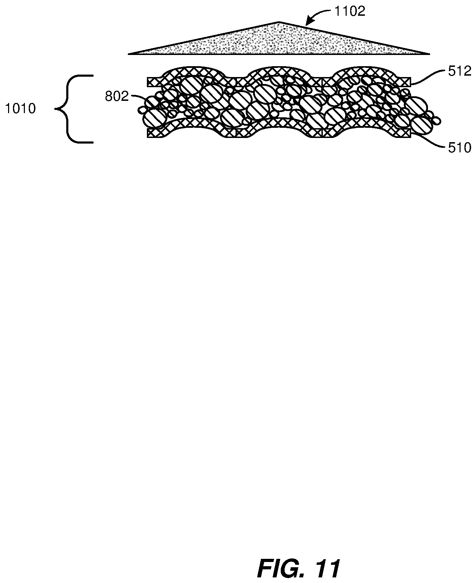

FIG. 11 is an illustration of an example step for manufacturing an array of pancake optics. As shown in FIG. 11, the method of manufacture may include applying a broad-area curing process to stack 1010. For example, the method of manufacture may include applying ultraviolet light 1102 to stack 1010, thereby setting the adhesive in stack 1010.

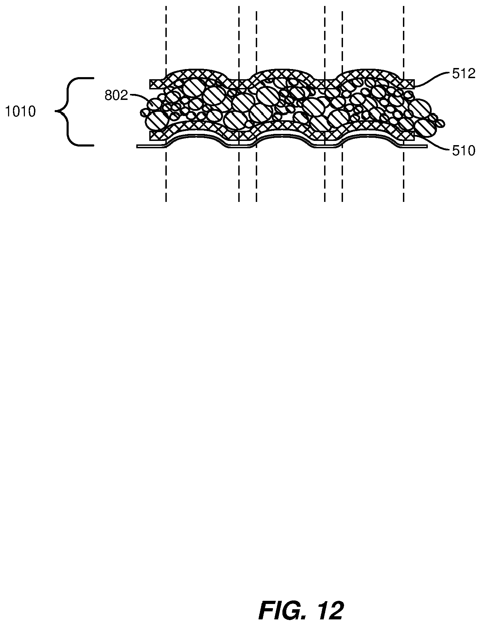

FIG. 12 is an illustration of an example step for singulating pancake optics apparatuses from an array of pancake optics. As shown in FIG. 12, the method for manufacture may include singulating pancake lenses from stack 1010. For example, stack 1010 may be an array of connected pancake lenses (e.g., according to the depicted example of FIG. 1A and other FIGS. described herein, a three-by-three rectilinear array of pancake lenses). Thus, in this example, the method of manufacture may singulate nine pancake lenses from stack 1010. However, it may be appreciated that the same principles described herein may be scaled to produce larger arrays with a greater number of resulting pancake lenses. The method for manufacture may include singulating the pancake lenses in any suitable manner. For example, singulating the pancake lenses may involve performing a computer numerical control cutting process.

In addition to singulating pancake lenses from stack 1010, the method for manufacture may include coupling a partial reflector (e.g., 50/50 mirror) to a front surface of a front lens of each pancake lens. In some examples the method for manufacture may perform coupling of the partial reflectors after singulation. Additionally or alternatively, the method of manufacture may include performing coupling of the partial reflectors before singulation. For example, the method of manufacture may include coupling an array of partial reflectors to a front surface of article 512. Coupling the partial reflectors may be performed with any suitable process. For example, coupling the partial reflectors may include a physical vapor deposition process to apply a partial reflector coat to stack 1010 and/or the singulated pancake lenses.

While examples described herein describe and depict the manufacture of pancake lenses with volume fill material (e.g., as in FIG. 7 or FIG. 8), in some examples a method of manufacture of pancake lenses may be directed to pancake lenses without volume fill material (e.g., instead, where a front lens and a back lens of each pancake lens are coupled together around the periphery with a shell element and no material is included between the front and back lenses). In these examples, the shell-based pancake lenses may be manufactured in any suitable manner. In one example, a temporary volume fill material may be used. After singulating the pancake lenses, the method of manufacture may include coupling the front and back lenses together with a shell element. After coupling the front and back lenses together with the shell element, the method of manufacture may include removing the temporary volume fill material. In another example, no volume fill material may be introduced. Instead, the method of manufacture may include coupling the front and back lenses together with a shell element as they are held in place with a holding force and/or coupling the front and back lenses together with a shell element after singulation.

FIG. 13 is an illustration of an exploded view of an example pancake optics stack 1300. As shown in FIG. 13, pancake optics stack 1300 may include a reflective polarizer film 1304, a lens 1306, a quarter-wave plate 1308, an optically clear adhesive 1310, a volume fill element 1312, an optically clear adhesive 1314, a lens 1316, and a 50/50 mirror 1318.

FIG. 14 is a flow diagram of an example method 1400 for manufacturing pancake optics. As shown in FIG. 14, at step 1410 method 1400 may include coupling an array of reflective polarizers to a back surface of a back optical substrate. For example, as shown in FIGS. 1A and 1B, at step 1410 method 1400 may include coupling an array of reflective polarizers 104 to back surface 112 of back optical substrate 102.

At step 1420 method 1400 may include coupling an array of quarter-wave plates to a front surface of the back optical substrate such that the array of quarter-wave plates is aligned with the array of reflective polarizers. For example, as shown in FIGS. 2A and 2B, at step 1420 method 1400 may include coupling array of quarter-wave plates 204 to front surface 110 of back optical substrate 102 such that array of quarter-wave plates 204 is aligned with array of reflective polarizers 104.

At step 1430 method 1400 may include molding the back optical substrate with at least one initial mold, where the initial mold defines an initial array of optical element surfaces that is aligned with the array of quarter-wave plates. For example, as shown in FIG. 3, at step 1430 method 1400 may include molding back optical substrate 102 (e.g., in the form of intermediate article 200) with at least one initial mold 302, where mold 302 defines an initial array 304 of optical element surfaces that is aligned with array of quarter-wave plates 204 (and, e.g., with array of reflective polarizers 104).

At step 1440 method 1400 may include twin-sheet thermoforming, between a front twin-sheet mold and a back twin-sheet mold, the back optical substrate with a front optical substrate, where the front twin-sheet mold defines a front array of optical element surfaces and the back twin-sheet mold defines a back array of optical element surfaces. For example, as shown in FIG. 4, at step 1440 method 1400 may include twin-sheet molding article 410 with article 412, where mold 402 defines a front array 422 of optical element surfaces and mold 404 defines a back array 424 of optical element surfaces.

### Example Embodiments

Example 1: A method of manufacture may include coupling an array of reflective polarizers to a back surface of a back optical substrate; coupling an array of quarter-wave plates to a front surface of the back optical substrate such that the array of quarter-wave plates is aligned with the array of reflective polarizers; molding the back optical substrate with at least one initial mold, wherein the at least one initial mold defines an initial array of optical element surfaces that is aligned with the array of quarter-wave plates; and twin-sheet thermoforming, between a front twin-sheet mold and a back twin-sheet mold, the back optical substrate with a front optical substrate, wherein the front twin-sheet mold defines a front array of optical element surfaces and the back mold defines a back array of optical element surfaces.

Example 2: The method of Example 1, where coupling the array of reflective polarizers to the back surface of the back optical substrate comprises solvent welding the array of reflective polarizers to the back surface of the back optical substrate.

Example 3: The method of any of Examples 1 and 2, where coupling the array of quarter-wave plates to the front surface of the back optical substrate comprises aligning each quarter-wave plate within the array of quarter-wave plates to an optical axis of a corresponding reflective polarizer within the array of reflective polarizers.

Example 4: The method of any of Examples 1-3, further including measuring an optical axis of each reflective polarizer within the array of reflective polarizer before coupling a corresponding quarter-wave plate within the array of quarter-wave plates to the front surface of the back optical substrate.

Example 5: The method of any of Examples 1-4, where coupling the array of quarter-wave plates to the front surface of the back optical substrate comprises radially patterning each quarter-wave plate within the array of quarter-wave plates to be thicker toward a perimeter of the quarter-wave plate.

Example 6: The method of any of Examples 1-5, where coupling the array of quarter-wave plates to the front surface of the back optical substrate comprises slot-die coating the array of quarter-wave plates onto the front surface of the back optical substrate.

Example 7: The method of any of Examples 1-6, further including coupling an array of partial reflectors to a front surface of the front optical substrate.

Example 8: The method of any of Examples 1-7, further including singulating an array of pancake lens stacks from the back optical substrate and the front optical substrate in alignment with the front array of optical element surfaces and the back array of optical element su rfaces.

Example 9: The method of any of Examples 1-8, further including, for each pancake lens stack within the array of pancake lens stacks, coupling a back lens of the pancake lens stack originating from the back optical substrate with a front lens of the pancake lens stack originating from the front optical substrate.

Example 10: The method of any of Examples 1-9, further including applying a back holding force to hold the molded back optical substrate to the back mold and a front holding force to hold the molded front optical substrate to the front mold; applying at least one adhesive to a back surface of the molded front optical substrate and the front surface of the molded back optical substrate; inserting volume fill material between the molded back optical substrate and the molded front optical substrate; and vacuum laminating the molded front optical substrate, adhesive, volume fill material, and molded back optical substrate together.

Example 11: The method of any of Examples 1-10, where the volume fill includes an integral compression-molded element.

Example 12: The method of any of Examples 1-11, where the volume fill includes a plurality of volume-fill chunks.

Example 13: The method of any of Examples 1-12, further including curing the adhesive after vacuum laminating the molded front optical substrate, adhesive, volume fill material, and molded back optical substrate together, thereby creating an unsingulated array of pancake lenses.

Example 14: The method of any of Examples 1-13, further including coupling an array of partial mirrors to the front surface of the front optical substrate.

Example 15: The method of any of Examples 1-14, further including singulating the unsingulated array of pancake lenses.

Example 16: An apparatus may include a pancake lens including a front lens, a partial reflector coupled to a front surface of the front lens; a back lens; a quarter-wave plate coupled to a front surface of the back lens; and a reflective polarizer coupled to a back surface of the back lens.

Example 17: The apparatus of Example 16, where the pancake lens further includes volume-fill material between the front lens and the back lens and adhesive coupling the volume-fill material, the front lens, and the back lens together.

Example 18: The apparatus of any of Examples 16-17, where the front lens and the back lens are thermoformed from a shared thermoforming process.

Example 19: The apparatus of claim 16, where the front lens and the back lens are thermoformed from a shared thermoforming process.

Example 20: A system may include (i) a pancake lens including a front lens, a partial reflector coupled to a front surface of the front lens; a back lens; a quarter-wave plate coupled to a front surface of the back lens; and a reflective polarizer coupled to a back surface of the back lens and (ii) a head-mounted display including the pancake lens.

Embodiments of the present disclosure may include or be implemented in conjunction with various types of artificial-reality systems. Artificial reality is a form of reality that has been adjusted in some manner before presentation to a user, which may include, for example, a virtual reality, an augmented reality, a mixed reality, a hybrid reality, or some combination and/or derivative thereof. Artificial-reality content may include completely computer-generated content or computer-generated content combined with captured (e.g., real-world) content. The artificial-reality content may include video, audio, haptic feedback, or some combination thereof, any of which may be presented in a single channel or in multiple channels (such as stereo video that produces a three-dimensional (3D) effect to the viewer). Additionally, in some embodiments, artificial reality may also be associated with applications, products, accessories, services, or some combination thereof, that are used to, for example, create content in an artificial reality and/or are otherwise used in (e.g., to perform activities in) an artificial reality.

Artificial-reality systems may be implemented in a variety of different form factors and configurations. Some artificial-reality systems may be designed to work without near-eye displays (NEDs). Other artificial-reality systems may include an NED that also provides visibility into the real world (such as, e.g., augmented-reality system 1500 in FIG. 15) or that visually immerses a user in an artificial reality (such as, e.g., virtual-reality system 1600 in FIG. 16). While some artificial-reality devices may be self-contained systems, other artificial-reality devices may communicate and/or coordinate with external devices to provide an artificial-reality experience to a user. Examples of such external devices include handheld controllers, mobile devices, desktop computers, devices worn by a user, devices worn by one or more other users, and/or any other suitable external system.

Turning to FIG. 15, augmented-reality system 1500 may include an eyewear device 1502 with a frame 1510 configured to hold a left display device 1515(A) and a right display device 1515(B) in front of a user's eyes. Display devices 1515(A) and 1515(B) may act together or independently to present an image or series of images to a user. While augmented-reality system 1500 includes two displays, embodiments of this disclosure may be implemented in augmented-reality systems with a single NED or more than two NEDs.

In some embodiments, augmented-reality system 1500 may include one or more sensors, such as sensor 1540. Sensor 1540 may generate measurement signals in response to motion of augmented-reality system 1500 and may be located on substantially any portion of frame 1510. Sensor 1540 may represent one or more of a variety of different sensing mechanisms, such as a position sensor, an inertial measurement unit (IMU), a depth camera assembly, a structured light emitter and/or detector, or any combination thereof. In some embodiments, augmented-reality system 1500 may or may not include sensor 1540 or may include more than one sensor. In embodiments in which sensor 1540 includes an IMU, the IMU may generate calibration data based on measurement signals from sensor 1540. Examples of sensor 1540 may include, without limitation, accelerometers, gyroscopes, magnetometers, other suitable types of sensors that detect motion, sensors used for error correction of the IMU, or some combination thereof.

In some examples, augmented-reality system 1500 may also include a microphone array with a plurality of acoustic transducers 1520(A)-1520(J), referred to collectively as acoustic transducers 1520. Acoustic transducers 1520 may represent transducers that detect air pressure variations induced by sound waves. Each acoustic transducer 1520 may be configured to detect sound and convert the detected sound into an electronic format (e.g., an analog or digital format). The microphone array in FIG. 15 may include, for example, ten acoustic transducers: 1520(A) and 1520(B), which may be designed to be placed inside a corresponding ear of the user, acoustic transducers 1520(C), 1520(D), 1520(E), 1520(F), 1520(G), and 1520(H), which may be positioned at various locations on frame 1510, and/or acoustic transducers 1520(l) and 1520(J), which may be positioned on a corresponding neckband 1505.

In some embodiments, one or more of acoustic transducers 1520(A)-(J) may be used as output transducers (e.g., speakers). For example, acoustic transducers 1520(A) and/or 1520(B) may be earbuds or any other suitable type of headphone or speaker.

The configuration of acoustic transducers 1520 of the microphone array may vary. While augmented-reality system 1500 is shown in FIG. 15 as having ten acoustic transducers 1520, the number of acoustic transducers 1520 may be greater or less than ten. In some embodiments, using higher numbers of acoustic transducers 1520 may increase the amount of audio information collected and/or the sensitivity and accuracy of the audio information. In contrast, using a lower number of acoustic transducers 1520 may decrease the computing power required by an associated controller 1550 to process the collected audio information. In addition, the position of each acoustic transducer 1520 of the microphone array may vary. For example, the position of an acoustic transducer 1520 may include a defined position on the user, a defined coordinate on frame 1510, an orientation associated with each acoustic transducer 1520, or some combination thereof.

Acoustic transducers 1520(A) and 1520(B) may be positioned on different parts of the user's ear, such as behind the pinna, behind the tragus, and/or within the auricle or fossa. Or, there may be additional acoustic transducers 1520 on or surrounding the ear in addition to acoustic transducers 1520 inside the ear canal. Having an acoustic transducer 1520 positioned next to an ear canal of a user may enable the microphone array to collect information on how sounds arrive at the ear canal. By positioning at least two of acoustic transducers 1520 on either side of a user's head (e.g., as binaural microphones), augmented-reality device 1500 may simulate binaural hearing and capture a 3D stereo sound field around about a user's head. In some embodiments, acoustic transducers 1520(A) and 1520(B) may be connected to augmented-reality system 1500 via a wired connection 1530, and in other embodiments acoustic transducers 1520(A) and 1520(B) may be connected to augmented-reality system 1500 via a wireless connection (e.g., a BLUETOOTH connection). In still other embodiments, acoustic transducers 1520(A) and 1520(B) may not be used at all in conjunction with augmented-reality system 1500.

Acoustic transducers 1520 on frame 1510 may be positioned in a variety of different ways, including along the length of the temples, across the bridge, above or below display devices 1515(A) and 1515(B), or some combination thereof. Acoustic transducers 1520 may also be oriented such that the microphone array is able to detect sounds in a wide range of directions surrounding the user wearing the augmented-reality system 1500. In some embodiments, an optimization process may be performed during manufacturing of augmented-reality system 1500 to determine relative positioning of each acoustic transducer 1520 in the microphone array.

In some examples, augmented-reality system 1500 may include or be connected to an external device (e.g., a paired device), such as neckband 1505. Neckband 1505 generally represents any type or form of paired device. Thus, the following discussion of neckband 1505 may also apply to various other paired devices, such as charging cases, smart watches, smart phones, wrist bands, other wearable devices, hand-held controllers, tablet computers, laptop computers, other external compute devices, etc.

As shown, neckband 1505 may be coupled to eyewear device 1502 via one or more connectors. The connectors may be wired or wireless and may include electrical and/or non-electrical (e.g., structural) components. In some cases, eyewear device 1502 and neckband 1505 may operate independently without any wired or wireless connection between them. While FIG. 15 illustrates the components of eyewear device 1502 and neckband 1505 in example locations on eyewear device 1502 and neckband 1505, the components may be located elsewhere and/or distributed differently on eyewear device 1502 and/or neckband 1505. In some embodiments, the components of eyewear device 1502 and neckband 1505 may be located on one or more additional peripheral devices paired with eyewear device 1502, neckband 1505, or some combination thereof.

Pairing external devices, such as neckband 1505, with augmented-reality eyewear devices may enable the eyewear devices to achieve the form factor of a pair of glasses while still providing sufficient battery and computation power for expanded capabilities. Some or all of the battery power, computational resources, and/or additional features of augmented-reality system 1500 may be provided by a paired device or shared between a paired device and an eyewear device, thus reducing the weight, heat profile, and form factor of the eyewear device overall while still retaining desired functionality. For example, neckband 1505 may allow components that would otherwise be included on an eyewear device to be included in neckband 1505 since users may tolerate a heavier weight load on their shoulders than they would tolerate on their heads. Neckband 1505 may also have a larger surface area over which to diffuse and disperse heat to the ambient environment. Thus, neckband 1505 may allow for greater battery and computation capacity than might otherwise have been possible on a stand-alone eyewear device. Since weight carried in neckband 1505 may be less invasive to a user than weight carried in eyewear device 1502, a user may tolerate wearing a lighter eyewear device and carrying or wearing the paired device for greater lengths of time than a user would tolerate wearing a heavy standalone eyewear device, thereby enabling users to more fully incorporate artificial-reality environments into their day-to-day activities.

Neckband 1505 may be communicatively coupled with eyewear device 1502 and/or to other devices. These other devices may provide certain functions (e.g., tracking, localizing, depth mapping, processing, storage, etc.) to augmented-reality system 1500. In the embodiment of FIG. 15, neckband 1505 may include two acoustic transducers (e.g., 1520(I) and 1520(J)) that are part of the microphone array (or potentially form their own microphone subarray). Neckband 1505 may also include a controller 1525 and a power source 1535.

Acoustic transducers 1520(I) and 1520(J) of neckband 1505 may be configured to detect sound and convert the detected sound into an electronic format (analog or digital). In the embodiment of FIG. 15, acoustic transducers 1520(I) and 1520(J) may be positioned on neckband 1505, thereby increasing the distance between the neckband acoustic transducers 1520(I) and 1520(J) and other acoustic transducers 1520 positioned on eyewear device 1502. In some cases, increasing the distance between acoustic transducers 1520 of the microphone array may improve the accuracy of beamforming performed via the microphone array. For example, if a sound is detected by acoustic transducers 1520(C) and 1520(D) and the distance between acoustic transducers 1520(C) and 1520(D) is greater than, e.g., the distance between acoustic transducers 1520(D) and 1520(E), the determined source location of the detected sound may be more accurate than if the sound had been detected by acoustic transducers 1520(D) and 1520(E).

Controller 1525 of neckband 1505 may process information generated by the sensors on neckband 1505 and/or augmented-reality system 1500. For example, controller 1525 may process information from the microphone array that describes sounds detected by the microphone array. For each detected sound, controller 1525 may perform a direction-of-arrival (DOA) estimation to estimate a direction from which the detected sound arrived at the microphone array. As the microphone array detects sounds, controller 1525 may populate an audio data set with the information. In embodiments in which augmented-reality system 1500 includes an inertial measurement unit, controller 1525 may compute all inertial and spatial calculations from the IMU located on eyewear device 1502. A connector may convey information between augmented-reality system 1500 and neckband 1505 and between augmented-reality system 1500 and controller 1525. The information may be in the form of optical data, electrical data, wireless data, or any other transmittable data form. Moving the processing of information generated by augmented-reality system 1500 to neckband 1505 may reduce weight and heat in eyewear device 1502, making it more comfortable to the user.

Power source 1535 in neckband 1505 may provide power to eyewear device 1502 and/or to neckband 1505. Power source 1535 may include, without limitation, lithium ion batteries, lithium-polymer batteries, primary lithium batteries, alkaline batteries, or any other form of power storage. In some cases, power source 1535 may be a wired power source. Including power source 1535 on neckband 1505 instead of on eyewear device 1502 may help better distribute the weight and heat generated by power source 1535.

As noted, some artificial-reality systems may, instead of blending an artificial reality with actual reality, substantially replace one or more of a user's sensory perceptions of the real world with a virtual experience. One example of this type of system is a head-worn display system, such as virtual-reality system 1600 in FIG. 16, that mostly or completely covers a user's field of view. Virtual-reality system 1600 may include a front rigid body 1602 and a band 1604 shaped to fit around a user's head. Virtual-reality system 1600 may also include output audio transducers 1606(A) and 1606(B). Furthermore, while not shown in FIG. 16, front rigid body 1602 may include one or more electronic elements, including one or more electronic displays, one or more inertial measurement units (IMUs), one or more tracking emitters or detectors, and/or any other suitable device or system for creating an artificial-reality experience.

Artificial-reality systems may include a variety of types of visual feedback mechanisms. For example, display devices in augmented-reality system 1500 and/or virtual-reality system 1600 may include one or more liquid crystal displays (LCDs), light emitting diode (LED) displays, microLED displays, organic LED (OLED) displays, digital light project (DLP) micro-displays, liquid crystal on silicon (LCoS) micro-displays, and/or any other suitable type of display screen. These artificial-reality systems may include a single display screen for both eyes or may provide a display screen for each eye, which may allow for additional flexibility for varifocal adjustments or for correcting a user's refractive error. Some of these artificial-reality systems may also include optical subsystems having one or more lenses (e.g., concave or convex lenses, Fresnel lenses, adjustable liquid lenses, etc.) through which a user may view a display screen. These optical subsystems may serve a variety of purposes, including to collimate (e.g., make an object appear at a greater distance than its physical distance), to magnify (e.g., make an object appear larger than its actual size), and/or to relay (to, e.g., the viewer's eyes) light. These optical subsystems may be used in a non-pupil-forming architecture (such as a single lens configuration that directly collimates light but results in so-called pincushion distortion) and/or a pupil-forming architecture (such as a multi-lens configuration that produces so-called barrel distortion to nullify pincushion distortion).

In addition to or instead of using display screens, some of the artificial-reality systems described herein may include one or more projection systems. For example, display devices in augmented-reality system 1500 and/or virtual-reality system 1600 may include microLED projectors that project light (using, e.g., a waveguide) into display devices, such as clear combiner lenses that allow ambient light to pass through. The display devices may refract the projected light toward a user's pupil and may enable a user to simultaneously view both artificial-reality content and the real world. The display devices may accomplish this using any of a variety of different optical components, including waveguide components (e.g., holographic, planar, diffractive, polarized, and/or reflective waveguide elements), light-manipulation surfaces and elements (such as diffractive, reflective, and refractive elements and gratings), coupling elements, etc. Artificial-reality systems may also be configured with any other suitable type or form of image projection system, such as retinal projectors used in virtual retina displays.

The artificial-reality systems described herein may also include various types of computer vision components and subsystems. For example, augmented-reality system 1500 and/or virtual-reality system 1600 may include one or more optical sensors, such as two-dimensional (2D) or 3D cameras, structured light transmitters and detectors, time-of-flight depth sensors, single-beam or sweeping laser rangefinders, 3D LiDAR sensors, and/or any other suitable type or form of optical sensor. An artificial-reality system may process data from one or more of these sensors to identify a location of a user, to map the real world, to provide a user with context about real-world surroundings, and/or to perform a variety of other functions.

The artificial-reality systems described herein may also include one or more input and/or output audio transducers. Output audio transducers may include voice coil speakers, ribbon speakers, electrostatic speakers, piezoelectric speakers, bone conduction transducers, cartilage conduction transducers, tragus-vibration transducers, and/or any other suitable type or form of audio transducer. Similarly, input audio transducers may include condenser microphones, dynamic microphones, ribbon microphones, and/or any other type or form of input transducer. In some embodiments, a single transducer may be used for both audio input and audio output.

In some embodiments, the artificial-reality systems described herein may also include tactile (i.e., haptic) feedback systems, which may be incorporated into headwear, gloves, body suits, handheld controllers, environmental devices (e.g., chairs, floormats, etc.), and/or any other type of device or system. Haptic feedback systems may provide various types of cutaneous feedback, including vibration, force, traction, texture, and/or temperature. Haptic feedback systems may also provide various types of kinesthetic feedback, such as motion and compliance. Haptic feedback may be implemented using motors, piezoelectric actuators, fluidic systems, and/or a variety of other types of feedback mechanisms. Haptic feedback systems may be implemented independent of other artificial-reality devices, within other artificial-reality devices, and/or in conjunction with other artificial-reality devices.

By providing haptic sensations, audible content, and/or visual content, artificial-reality systems may create an entire virtual experience or enhance a user's real-world experience in a variety of contexts and environments. For instance, artificial-reality systems may assist or extend a user's perception, memory, or cognition within a particular environment. Some systems may enhance a user's interactions with other people in the real world or may enable more immersive interactions with other people in a virtual world. Artificial-reality systems may also be used for educational purposes (e.g., for teaching or training in schools, hospitals, government organizations, military organizations, business enterprises, etc.), entertainment purposes (e.g., for playing video games, listening to music, watching video content, etc.), and/or for accessibility purposes (e.g., as hearing aids, visual aids, etc.). The embodiments disclosed herein may enable or enhance a user's artificial-reality experience in one or more of these contexts and environments and/or in other contexts and environments.

The process parameters and sequence of the steps described and/or illustrated herein are given by way of example only and can be varied as desired. For example, while the steps illustrated and/or described herein may be shown or discussed in a particular order, these steps do not necessarily need to be performed in the order illustrated or discussed. The various exemplary methods described and/or illustrated herein may also omit one or more of the steps described or illustrated herein or include additional steps in addition to those disclosed.

The preceding description has been provided to enable others skilled in the art to best utilize various aspects of the exemplary embodiments disclosed herein. This exemplary description is not intended to be exhaustive or to be limited to any precise form disclosed. Many modifications and variations are possible without departing from the scope of the present disclosure. The embodiments disclosed herein should be considered in all respects illustrative and not restrictive. Reference should be made to the appended claims and their equivalents in determining the scope of the present disclosure.

Unless otherwise noted, the terms "connected to" and "coupled to" (and their derivatives), as used in the specification and claims, are to be construed as permitting both direct and indirect (i.e., via other elements or components) connection. In addition, the terms "a" or "an," as used in the specification and claims, are to be construed as meaning "at least one of." Finally, for ease of use, the terms "including" and "having" (and their derivatives), as used in the specification and claims, are interchangeable with and have the same meaning as the word "comprising."

## Claims

1. A method comprising:
coupling an array of reflective polarizers to a back surface of a back optical substrate;
coupling an array of quarter-wave plates to a front surface of the back optical substrate such that the array of quarter-wave plates is aligned with the array of reflective polarizers;
molding the back optical substrate with at least one initial mold, wherein the at least one initial mold defines an initial array of optical element surfaces that is aligned with the array of quarter-wave plates; and
twin-sheet thermoforming, between a front twin-sheet mold and a back twin-sheet mold, the back optical substrate with a front optical substrate, wherein the front twin-sheet mold defines a front array of optical element surfaces and the back mold defines a back array of optical element surfaces.

2. The method of claim 1, wherein coupling the array of reflective polarizers to the back surface of the back optical substrate comprises solvent welding the array of reflective polarizers to the back surface of the back optical substrate.

3. The method of claim 1 or 2, wherein coupling the array of quarter-wave plates to the front surface of the back optical substrate comprises aligning each quarter-wave plate within the array of quarter-wave plates to an optical axis of a corresponding reflective polarizer within the array of reflective polarizers.

4. The method of claim 3, further comprising measuring an optical axis of each reflective polarizer within the array of reflective polarizer before coupling a corresponding quarter-wave plate within the array of quarter-wave plates to the front surface of the back optical substrate.

5. The method according to any of the preceding claims, wherein coupling the array of quarter-wave plates to the front surface of the back optical substrate comprises radially patterning each quarter-wave plate within the array of quarter-wave plates to be thicker toward a perimeter of the quarter-wave plate.

6. The method according to any of the preceding claims, wherein coupling the array of quarter-wave plates to the front surface of the back optical substrate comprises slot-die coating the array of quarter-wave plates onto the front surface of the back optical substrate; and/or preferably the method further comprising coupling an array of partial reflectors to a front surface of the front optical substrate.

7. The method according to any of the preceding claims, further comprising singulating an array of pancake lens stacks from the back optical substrate and the front optical substrate in alignment with the front array of optical element surfaces and the back array of optical element surfaces; and/or preferably the method further comprising, for each pancake lens stack within the array of pancake lens stacks, coupling a back lens of the pancake lens stack originating from the back optical substrate with a front lens of the pancake lens stack originating from the front optical substrate.

8. The method according to any of the preceding claims, further comprising:
applying a back holding force to hold the molded back optical substrate to the back mold and a front holding force to hold the molded front optical substrate to the front mold;
applying at least one adhesive to a back surface of the molded front optical substrate and the front surface of the molded back optical substrate;
inserting volume fill material between the molded back optical substrate and the molded front optical substrate; and
vacuum laminating the molded front optical substrate, adhesive, volume fill material, and molded back optical substrate together.

9. The method according to any of the preceding claims, wherein the volume fill comprises an integral compression-molded element.

10. The method according to any of the preceding claims, wherein the volume fill comprises a plurality of volume-fill chunks.

11. The method of the preceding claims, further comprising curing the adhesive after vacuum laminating the molded front optical substrate, adhesive, volume fill material, and molded back optical substrate together, thereby creating an unsingulated array of pancake lenses; and/or preferably the method further comprising coupling an array of partial mirrors to the front surface of the front optical substrate; and/or preferably the method further comprising singulating the unsingulated array of pancake lenses.

12. An apparatus comprising:
a pancake lens, comprising:
a front lens;
a partial reflector coupled to a front surface of the front lens;
a back lens;
a quarter-wave plate coupled to a front surface of the back lens; and
a reflective polarizer coupled to a back surface of the back lens.

13. The apparatus of claim 12, where the pancake lens further comprises:
volume-fill material between the front lens and the back lens; and
adhesive coupling the volume-fill material, the front lens, and the back lens together; and/or preferably wherein the volume-fill material comprises a plurality of discrete chunks of material.

14. The apparatus of claim 11 or 12, wherein the front lens and the back lens are thermoformed from a shared thermoforming process.

15. A system comprising:
a pancake lens, comprising:
a front lens;
a partial reflector coupled to a front surface of the front lens;
a back lens, wherein the front lens and the back lens are thermoformed from a shared thermoforming process;
a quarter-wave plate coupled to a front surface of the back lens; and
a reflective polarizer coupled to a back surface of the back lens; and
a head-mounted display comprising the pancake lens.
